# EUROPEAN PATENT SPECIFICATION

(11) **EP 3 682 999 B1**
(45) Date of publication and mention of the grant of the patent: **06.03.2024**
(21) Application number: 20152450.1
(22) Date of filing: 17.01.2020
(51) Int. Cl.: B23K 20/16, H01R 4/02

(54) **ELECTRICAL CONNECTION ASSEMBLY HAVING TWO WELDED CONDUCTORS AND A LAYER OF CYANOACRYLATE GLUE BETWEEN THE CONDUCTORS, AND METHOD FOR THIS**
ELEKTRISCHE VERBINDUNGSANORDNUNG MIT ZWEI GESCHWEISSTEN LEITERN UND EINER SCHICHT AUS CYANOACRYLAT-KLEBER ZWISCHEN DEN LEITERN UND VERFAHREN DAFÜR
ENSEMBLE DE CONNEXION ÉLECTRIQUE DOTÉ DE DEUX CONDUCTEURS SOUDÉS ET D'UNE COUCHE DE COLLE CYANOACRYLATE ENTRE LES CONDUCTEURS, ET PROCÉDÉ CORRESPONDANT

(30) Priority: 18.01.2019 DE 102019200659
(43) Date of publication of application: 22.07.2020
(73) Proprietor: TE Connectivity Germany GmbH, 64625 Bensheim (DE)
(72) Inventor: DRESSEL, Andre, 68623 Lampertheim (DE); BRABETZ, Florian, 64579 Gernsheim (DE); BERIKAI, Aniruddha, 64293 Darmstadt (DE); HUBER, Jens, 64646 Heppenheim (DE); BECK, Matthias, 91555 Feuchtwangen (DE)
(74) Representative: Grünecker Patent- und Rechtsanwälte PartG mbB

(56) References cited:
- EP-A1- 2 679 328
- EP-A1- 3 031 564
- DE-A1-102015 100 935
- US-A1- 2011 073 572

## Description

The invention relates to an electrical connection assembly, wherein the connection assembly has at least two conductors which are welded onto one another wherein at least one layer consisting of or comprising cyanoacrylate glue is located in at least one area between the two conductors. Furthermore, the invention relates to a method for welding at least two conductors. Finally, the invention relates to power electronics, in particular for an electrically powered vehicle, which have such an electrical connection assembly.

When welding ribbon cables to battery contacts in electric vehicles, it is important to protect the conductors which are welded onto one another against electrochemical corrosion. Moreover, it is advantageous if the welding point has relief from tension.

In DE 10 2015 100935 A1, a method for temporarily fixating two metal parts, which are to be welded to one another is disclosed. The two parts are glue together by means of cyanoacrylate glue, which is burned without residue during the subsequent welding process. Therefore, the cyanoacrylate glue itself offers no corrosion protection nor any tension relieving function for the welding point.

The invention consequently sets itself the aim of providing such a connection of two conductors, which, in addition to protection from corrosion and relief from tension, also enables a simple method procedure and gives rise to low costs.

This object is solved by the subject matter of the independent claims

Preferred embodiments are defined by the dependent claims.

According to the invention, this problem is solved for the electrical connection assembly specified at the outset by the features of claim 1.

According to the invention, this problem is solved for the method specified at the outset by the method of claim 10.

The electrical connection assembly may be part of power electronics for an electrically powered vehicle, wherein one of the conductors can be connected to a battery and one of the conductors can be a ribbon cable.

The solution according to the invention is simple to manufacture and inexpensive. Cyanoacrylate glues are household adhesives which are freely available, simple to handle and inexpensive to purchase. According to the invention, they simultaneously serve as protection from corrosion and relief from tension.

Hereafter, features of the invention which further develop it will be described with their respectively associated technical effect. The individual features are advantageous per se and can be combined with one another as desired.

It is therefore particularly advantageous if the thickness of the at least one layer corresponds at least partially to a maximum of double the surface roughness of the surface in the at least one area coated with cyanoacrylate glue. The thickness preferably corresponds to the at least one layer of the surface roughness, with it being appropriate to still regard deviations of ± one third as being a correspondence. Ideally, the at least one layer of cyanoacrylate glue only fills the surface roughnesses without covering the tips of the surface roughness. At the tips of the roughness, the thickness of the layer consequently may tend towards zero. Such a thin layer thickness leads to the two conductors being able to be welded onto one another despite the glue layer arranged therebetween.

The surface roughness is preferably determined according to ISO 25178 and/or DIN 4760. The surface roughness may be the mean roughness, the quadratic roughness, the averaged roughness depth or the maximum roughness depth in the area.

In a further advantageous configuration, the area provided with cyanoacrylate glue at least partially has a different surface roughness than an area which is not coated with cyanoacrylate glue. The surface roughness of the area coated with cyanoacrylate glue may be greater or less than the surface roughness of the at least one part of the area which is not coated. In order to obtain a different surface roughness, the surface can be processed subsequently, in particular in the area coated with cyanoacrylate glue, for example roughened or polished or smoothed.

In order to achieve a predetermined surface roughness and thus reproducible results by virtue of consistent layer thicknesses which are situated within narrow tolerances, it is advantageous if at least one of the faces, which point towards one another, of the conductors is at least partially roughened or polished or smoothed in the at least one area. The roughened or polished area is preferably provided at least partially with the layer of cyanoacrylate glue.

The roughening can be carried out by way of sandblasting, machining, grinding, laser structuring and/or embossing, for example. Of course, the cyanoacrylate glue may be arranged on not only one, but rather on both of the opposing faces of the conductors which are welded onto one another.

In order to keep production costs low, at least one of the two conductors can be produced from a sheet metal material at least in the at least one area. The conductors can alternatively or cumulatively be configured in a disc or plate shape at least in that area.

In the electrical connection assembly, they preferably lie on one another over a large surface in the at least one area, so that low contact resistances are present and the transmission of large currents does not generate excessive heating.

According to a further advantageous configuration, at least one of the conductors, preferably both conductors, can be produced at least in the at least one area from an aluminium-containing material, including aluminium itself. By virtue of the low resistance values of aluminium, large currents can be conducted with small losses when such a material is selected.

It is known that cyanoacrylate glue does not harden, or hardens more slowly, if it is not exposed to moisture or is located in an acidic environment. A material which impedes or prevents the hardening of the cyanoacrylate glue is therefore, for example, a moisture-absorbing material, moisture-repellent and/or an acidic substance. A hydrophilic or hydrophobic layer can be manufactured by a Pyrosil method, for example. The inhibition of hardening can be performed, for example, by the use of an acid with a solvent, such as formic acid and acetone. The material which prevents or impedes the hardening of the cyanoacrylate glue can be present in the form of a layer. The layer may be located between a layer of cyanoacrylate glue and the conductor and/or between two layers of cyanoacrylate glue.

Alternatively to this, according to a further advantageous configuration, an acid, in particular an organic acid, may be dispersed in the substance of an insulation of a conductor. The dispersed acid may prevent the hardening of the cyanoacrylate glue. In this case, a later hardening of the cyanoacrylate glue can be achieved by exposing the cyanoacrylate glue to an activator, for example an alkaline environment.

In particular, the at least one subarea, or rather the material which impedes or prevents the hardening of the cyanoacrylate glue, is located adjacent to at least one welding point at which the at least two conductors are welded onto one another. In particular, the welding point can be at least partially, preferably completely, surrounded by the area and/or subsection in which the material which impedes or prevents the hardening of the cyanoacrylate glue is located.

The material which prevents or impedes the cyanoacrylate-hardening may be arranged, for example applied, at the later welding point prior to the welding. After the welding, the welding point is located there. Remnants of the material which impedes or prevents the hardening of the cyanoacrylate glue may however still be located in the vicinity, in particular the direct vicinity, of the welding point.

The material which impedes or prevents the hardening of the cyanoacrylate glue can be applied prior to or after the application of the cyanoacrylate glue. The material may be located on, or applied onto, the same conductor as the cyanoacrylate glue or on the conductor lying opposite the layer of cyanoacrylate glue.

The two conductors preferably touch one another, at least at points, outside the welding point. This is the case in particular when the layer of cyanoacrylate glue is so thin that the tips of the surface roughnesses of the two conductors can still come into electrical contact with one another.

Hereinafter, the invention is explained in greater detail using an exemplary embodiment with reference to the attached drawings. For the sake of simplicity, the same reference numbers are used in the drawings for elements which correspond to one another in terms of function and/or design.

The combination of features depicted and described using the exemplary embodiment serves solely as an example. It can be changed according to the embodiments above. For example, it is possible to omit a feature whose technical effect is of no importance in a particular application. Conversely, it is possible to add a feature which is not present in the depicted combination of features of the exemplary embodiment if the technical effect linked to this feature is required for, or is advantageous to, a particular application.

In the drawings:
Fig. 1 shows a schematic depiction of a portion of power electronics, in particular for an electrically powered vehicle with an electrical connection assembly;
Fig. 2 shows a schematic depiction of an electrical connection assembly;
Fig. 3 shows a schematic depiction of detail III from Fig. 2;
Fig. 4 shows a schematic depiction of detail IV from Fig. 2;
Fig. 5 shows a schematic depiction of the method sequence for the manufacture of an electrical connection assembly.

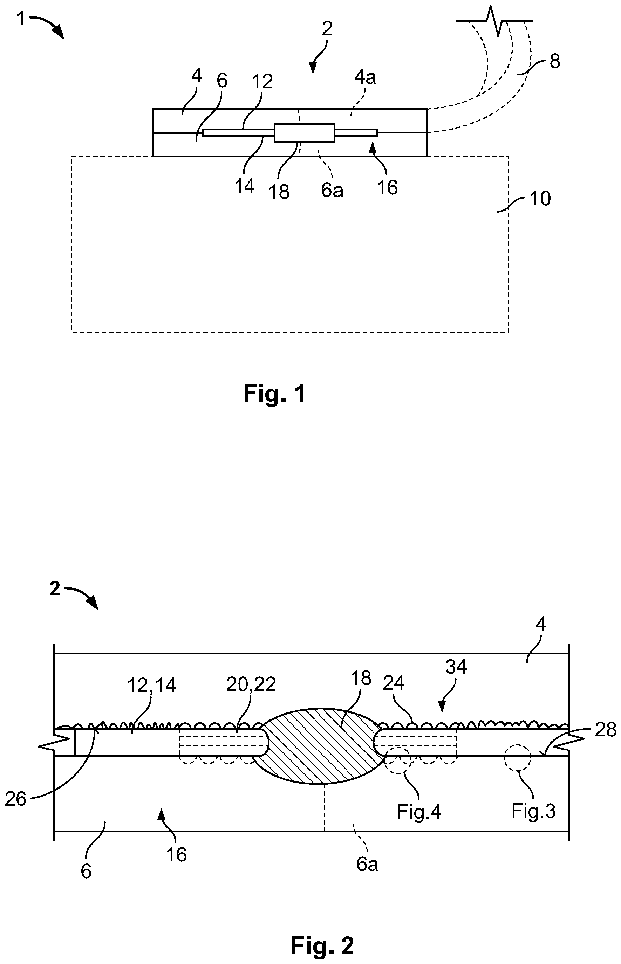

Fig. 1 shows a portion of power electronics 1, depicted here only schematically, as used in an electrically powered vehicle, for example. The power electronics have an electrical connection assembly 2. The electrical connection assembly 2 comprises at least two conductors 4, 6 welded onto one another. In addition, the electrical connection assembly 2 may have further conductors 4a, 6a, which are merely indicated by dashed lines in Fig. 1. One of the conductors, in this case the conductor 4, may be part of a ribbon cable 8. The other conductor, in this case the conductor 6, may be connected to a battery 10.

At least one of the conductors 4, 6 may be made of an aluminium-containing material, in order to keep the electrical resistances low. At least one of the conductors 4, 6 may be produced from a sheet metal material and in particular may be configured in a disc or plate shape.

The two conductors 4, 6 lie on one another as planarly as possible. At least one layer 12 consisting of or containing a cyanoacrylate glue 14 is located between them. The area 16 in which the cyanoacrylate glue 14 is located surrounds, at least partially, a welding point 18 at which the at least two conductors 4, 6 are materially connected to one another.

Fig. 2 shows an electrical connection assembly 2 in a larger depiction. As can be seen, at least one layer 20 comprising or consisting of a material which impedes or prevents the hardening of the cyanoacrylate glue 14 may be present close to or adjacent to the welding point 18. The material 22 which impedes or prevents the hardening of the cyanoacrylate glue may be a moisture-absorbing material and/or an acidic substance, for example. The layer 20 consisting of or comprising the material 22 may be arranged between the layer 12 of the cyanoacrylate glue 14 and a conductor 4, 6 or between two opposing layers 12 of cyanoacrylate glue 14. A layer 20 of the material 22 which impedes or prevents the hardening of the cyanoacrylate glue 14 may be present on one of the conductors 4, 6 or on both opposing conductors 4, 6. The material 22 may be integrated into an electrical insulation of a conductor 4, 6, for example a ribbon cable, this material being released by said insulation upon welding.

The layer 12 and/or the layer 20 was originally also present at least partially at the point at which the welding point 18 is located after the conductors 4, 6 are welded. The welding point 18 may have fully replaced the (former) layer 20, meaning that no remnant of this original layer 20 is present any longer. However, as schematically depicted in Fig. 2, there may still be remnants of this layer 20 between the conductors 4, 6 outside the welding point 18.

In the area 16 of the respective conductor 4, 6 which is coated with the cyanoacrylate glue 14, the surface 4 may be at least partially roughened, i.e. have a greater roughness R than the sections of the remaining, non-roughened surface. The roughening is indicated by reference number 24 in Fig. 2. The roughening may be performed by embossing, grinding, machining or sandblasting. As a result of the roughening 24, a predetermined surface roughness R is obtained which differs only slightly over a multiplicity of different conductors 4, 6. The surface roughness is preferably measured in this case according to ISO 25178 and/or DIN 4760. The surface roughness may be the mean roughness, the quadratic roughness, the averaged roughness depth or the maximum roughness depth in area 16 or a subarea thereof. The roughened area may have a greater surface roughness than the non-roughened area which surrounds it at least partially. If the basic material of the conductor 4 or 6 already has a very great surface roughness R, the surface 4 may also be provided with a lower surface roughness R in area 16, by means of polishing or smoothing, for example. A polished or smoothed area is then accordingly present instead of the roughening 24.

In Fig. 2, only one surface 28 of the one conductor 4 is provided with a roughening 24. Of course, it is also possible for the two opposing surfaces 26, 28 of the conductors 4, 6 to be roughened.

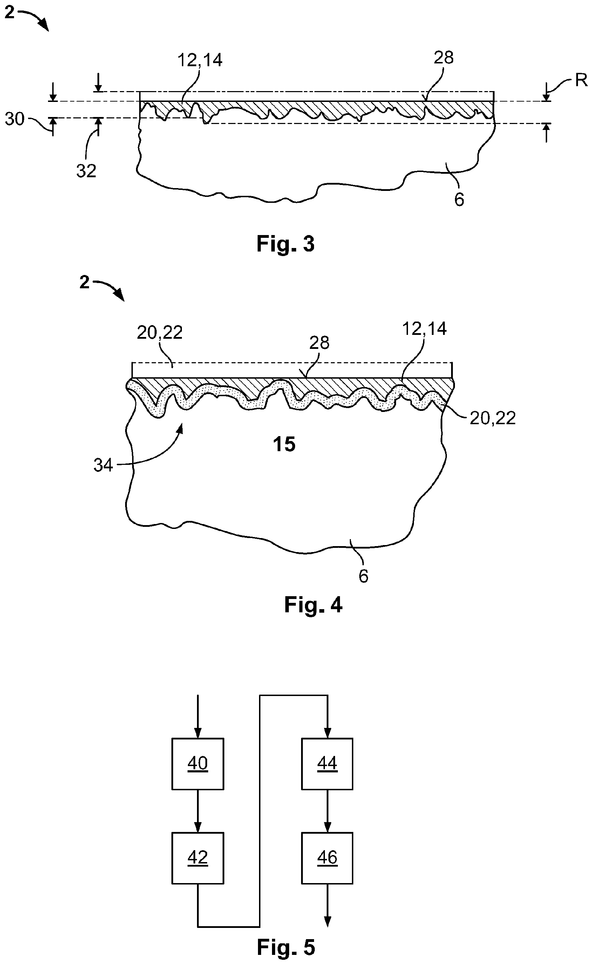

Fig. 3 shows detail III from Fig. 2. In this case, only the conductor 6 is depicted merely for the purposes of exemplification. The description can similarly relate to the conductor 4.

The surface 28 of the conductor 6 has a surface roughness R. The layer 12 of the cyanoacrylate glue 14, which has a layer thickness 30, is located on the surface 28. The layer thickness 30 corresponds to a maximum of double the surface roughness R and preferably to at least one times the surface roughness R within a tolerance of ± 30%.

The layer thickness 30 preferably corresponds at least approximately just to the surface roughness R, meaning that it just about covers or just releases the tips of the surface roughness R. At the tips of the surface roughness R, the layer thickness is therefore, in the preferred design, virtually zero. The layer 12 may also be applied without roughening 24 (Fig. 2). However, due to a varying surface roughness, the layer thickness under some circumstances is subject to relatively large deviations and the characteristics of the connection assembly 2 are less reproducible.

Fig. 4 shows detail IV from a subsection 34 (Fig. 2), in which the layer 20 of the material 22 which impedes or prevents the hardening of the cyanoacrylate glue 14 is located. The subsection 34 is located preferably completely within the region 16. The layer 20 consisting of or comprising the material 22 may be located directly on the conductor 6. However, as indicated by the dashed line, it may also be located on the layer 14 or on the conductor 4.

In order to manufacture the electrical connection assembly 2 depicted in Figs. 1 to 4, the method steps schematically depicted in Fig. 5 are carried out.

In an optional method step 40, at least one of the conductors 4, 6 is roughened in order produce a predetermined surface roughness R.

In a step 42, at least one of the conductors 4, 6 is coated with cyanoacrylate glue 14. Here, the layer thickness 30, as described above, is a maximum of double the surface roughness R. If the conductor 4, 6 on which the cyanoacrylate glue 14 has been applied has been roughened previously, then the cyanoacrylate glue 14 is applied onto the roughened area.

A further step 44 of the method relates to the application of a layer 20 of the material 22 which impedes or prevents the hardening of the cyanoacrylate glue. The step 44 can be carried out before or after step 42. The material 22 which impedes or prevents the hardening of the cyanoacrylate glue can be applied directly onto a conductor 4, 6 or onto the layer 12. In this case, the material 22 may be applied onto a conductor 4, 6 which is not coated with cyanoacrylate glue 14, as long as the layer 12 is located on the opposing conductor 4, 6. However, in this configuration, the two conductors should be brought together directly after the coating, in order to inhibit or impede the hardening of the cyanoacrylate glue 14 in the subsection 34.

In a step 46, the conductors 4, 6 are then welded onto one another at at least one welding point 18. The welding preferably takes place by way of, in particular, ultrashort laser pulses.

The welding point in this case is located in an area in which the layer 12 is located, i.e. in the area 16. In addition, the welding point 18 is located where the layer 20 is also located, i.e. in the subsection 34 of the area 16.

In the final manufactured electrical connection assembly 2, the conductors 4, 6 are electrically connected to one another by the welding point 18. The layer 12 of cyanoacrylate glue 14 represents an additional mechanically loadable connection which relieves the tension on the welding point 18. Due to the thin layer thickness 30, the glue may be applied prior to the welding 18. The layer 12 preferably hermetically encloses the welding point 18 and thus protects it from electrochemical corrosion. Outside the welding point 18, the two conductors 4, 6 can directly touch one another at tips of the surface roughness R, which further reduces the contact resistance between the conductors 4, 6.

### Reference numbers

- 1: power electronics
- 2: electrical connection assembly
- 4, 4a: conductor
- 6, 6a: conductor
- 8: ribbon cable
- 10: battery
- 12: layer consisting of or comprising cyanoacrylate glue
- 14: cyanoacrylate glue
- 16: area with the layer 12
- 18: welding point
- 20: layer consisting of or comprising a material which impedes or prevents the hardening of the cyanoacrylate glue
- 22: material which impedes or prevents the hardening of the cyanoacrylate glue
- 24: roughening
- 26: surface of one conductor
- 28: surface of the other conductor
- 30: layer thickness of the layer consisting of or comprising cyanoacrylate glue
- 32: doubled surface roughness R
- 34: subsection having the layer 20
- 32: surface roughness

## Claims

1. An electrical connection assembly (2) having at least two conductors (4, 6) which are welded onto one another, wherein at least one layer (12) consisting of or comprising cyanoacrylate glue (14) is located in at least one area (16) between the two conductors (4, 6), **characterised in that** a material (22), which impedes or prevents the hardening of the cyanoacrylate glue (14), is located at least in a subsection (34) of the area (16), the subsection (34) being located adjacent to at least one welding point (18) at which the at least two conductors (4, 6) are welded onto one another.

2. The electrical connection assembly (2) according to Claim 1, **characterised in that** the thickness (30) of the at least one layer (12) corresponds to a maximum of double, preferably between one times and double, the surface roughness (R) in the at least one area (16).

3. The electrical connection assembly (2) according to Claim 1 or 2, **characterised in that** at least one of the surfaces (26, 28), which point towards one another, of the conductors (4, 6) is roughened in at least a part of the at least one area (16).

4. The electrical connection assembly (2) according to any one of Claims 1 to 3, **characterised in that** the two conductors (4, 6) are produced from a sheet metal material at least in the at least one area (16).

5. The electrical connection assembly (2) according to any one of Claims 1 to 4, **characterised in that** at least one of the conductors (4, 6) is produced in the at least one area (16) from an aluminium-containing material.

6. The electrical connection assembly (2) according to any one of Claims 1 to 5, **characterised in that** the welding point (18) is at least partially surrounded by the area (16) and/or the subsection (34).

7. The electrical connection assembly (2) according to any one of Claims 1 to 6, **characterised in that** the two conductors (4, 6) directly touch one another, at least at points, outside a welding point (18).

8. The electrical connection assembly (2) according to any one of Claims 1 to 7, **characterised in that** one of the conductors (4) is part of a ribbon cable.

9. Power electronics (1) in particular for an electrically powered vehicle, **characterised by** an electrical connection assembly (2) according to any one of Claims 1 to 8, wherein one of the conductors (6) is connected to a battery (10).

10. A method for welding at least two conductors (4, 6), comprising the method steps:
- coating at least one area (16) of at least one conductor (4, 6) with a cyanoacrylate glue (14);
- applying a material (22), which impedes or prevents the hardening of the cyanoacrylate glue (14), onto at least one subsection (34) of the area (16) before or after the coating; and
- welding the at least two conductors (4, 6) after the coating and after applying the material (22), at a location adjacent to said subsection (34), such that the cyanoacrylate glue (14) is located between the two conductors (4, 6).

11. The method according to Claim 10, comprising the further method step:
- at least partially roughening the area (16) prior to the coating.

12. The method according to Claim 10 or 11, comprising the method step:
- welding the at least two conductors (4, 6) by means of laser pulses.

13. The method according to any one of Claims 10 to 12, comprising the further method step:
- welding the at least two conductors (4, 6) in a subsection (34) of the area (16), said subsection being one which is coated with the material (22).

## Patentansprüche

1. Elektrische Verbindungsanordnung (2) mit wenigstens zwei Leitern (4, 6), die aneinander geschweißt sind, wobei wenigstens eine Schicht (12), die aus Cyanoacrylat-Kleber (14) besteht oder diesen umfasst, in wenigstens einem Bereich (16) zwischen den zwei Leitern (4, 6) angeordnet ist, **dadurch gekennzeichnet, dass** ein Material (22), das ein Aushärten des Cyanoacrylat-Klebers (14) behindert oder verhindert, an wenigstens einem Teilabschnitt (34) des Bereichs (16) angeordnet ist, wobei der Teilabschnitt (34) in Nachbarschaft zu wenigstens einem Schweißpunkt (18), an dem die wenigstens zwei Leiter (4, 6) aneinander geschweißt sind, angeordnet ist.

2. Elektrische Verbindungsanordnung (2) nach Anspruch 1, **dadurch gekennzeichnet, dass** die Dicke (30) der wenigstens einen Schicht (12) maximal dem Doppelten und vorzugsweise zwischen dem Einfachen und dem Doppelten der Oberflächenrauheit (R) in dem wenigstens einen Bereich (16) entspricht.

3. Elektrische Verbindungsanordnung (2) nach Anspruch 1 oder 2, **dadurch gekennzeichnet, dass** wenigstens eine der einander zugewandten Oberflächen (26, 28) der Leiter (4, 6) in wenigstens einem Teil des wenigstens einen Bereichs (16) aufgeraut ist.

4. Elektrische Verbindungsanordnung (2) nach einem der Ansprüche 1 bis 3, **dadurch gekennzeichnet, dass** die zwei Leiter (4, 6) wenigstens in dem wenigstens einen Bereich (16) aus einem Blechmaterial ausgebildet sind.

5. Elektrische Verbindungsanordnung (2) nach einem der Ansprüche 1 bis 4, **dadurch gekennzeichnet, dass** wenigstens einer der Leiter (4, 6) in dem wenigstens einen Bereich (16) aus einem Aluminium enthaltenden Material ausgebildet ist.

6. Elektrische Verbindungsanordnung (2) nach einem der Ansprüche 1 bis 5, **dadurch gekennzeichnet, dass** der Schweißpunkt (18) wenigstens teilweise durch den Bereich (16) und/oder den Teilabschnitt (34) umgeben ist.

7. Elektrische Verbindungsanordnung (2) nach einem der Ansprüche 1 bis 6, **dadurch gekennzeichnet, dass** die zwei Leiter (4, 6) wenigstens an Punkten außerhalb eines Schweißpunkts (18) einander direkt berühren.

8. Elektrische Verbindungsanordnung (2) nach einem der Ansprüche 1 bis 7, **dadurch gekennzeichnet, dass** einer der Leiter (4) Teil eines Flachkabels ist.

9. Leistungselektronik (1), insbesondere für ein elektrisch angetriebenes Fahrzeug, **gekennzeichnet durch** eine elektrische Verbindungsanordnung (2) gemäß einem der Ansprüche 1 bis 8, wobei einer der Leiter (6) mit einer Batterie (10) verbunden ist.

10. Verfahren zum Schweißen von wenigstens zwei Leitern (4, 6), das die folgenden Verfahrensschritte umfasst:
- Beschichten wenigstens eines Bereichs (16) wenigstens eines Leiters (4, 6) mit einem Cyanoacrylat-Kleber (14),
- Auftragen eines Materials (22). das ein Aushärten des Cyanoacrylat-Klebers (14) behindert oder verhindert, auf wenigstens einen Teilabschnitt (34) des Bereichs (16) vor oder nach dem Beschichten, und
- Schweißen der wenigstens zwei Leiter (4, 6) nach dem Beschichten und nach dem Auftragen des Materials (22) an einer Position in Nachbarschaft zu dem Teilabschnitt (34) derart, dass der Cyanoacrylat-Kleber (14) zwischen den zwei Leitern (4, 6) angeordnet ist.

11. Verfahren nach Anspruch 10, das weiterhin den folgenden Verfahrensschritt umfasst:
- wenigstens teilweises Aufrauen des Bereichs (16) vor dem Beschichten.

12. Verfahren nach Anspruch 10 oder 11, das den folgenden Verfahrensschritt umfasst:
- Schweißen der wenigstens zwei Leiter (4, 6) unter Verwendung von Laserpulsen.

13. Verfahren nach einem der Ansprüche 10 bis 12, das weiterhin den folgenden Verfahrensschritt umfasst:
- Schweißen der wenigstens zwei Leiter (4, 6) in einem Teilabschnitt (34) des Bereichs (16), wobei der Teilabschnitt mit dem Material (22) beschichtet ist.

## Revendications

1. Ensemble de connexion électrique (2) ayant au moins deux conducteurs (4, 6) qui sont soudés l'un sur l'autre, dans lequel au moins une couche (12) constituée ou comprenant de la colle à base de cyanoacrylate (14) est située dans au moins une zone (16) entre les deux conducteurs (4, 6), **caractérisé en ce qu'**un matériau (22), qui entrave ou empêche le durcissement de la colle à base de cyanoacrylate (14), se trouve au moins dans une sous-section (34) de la zone (16), la sous-section (34) étant située à proximité d'au moins un point de soudage (18) au niveau duquel les au moins deux conducteurs (4, 6) sont soudés l'un sur l'autre.

2. Ensemble de connexion électrique (2) selon la revendication 1, **caractérisé en ce que** l'épaisseur (30) de l'au moins une couche (12) correspond au maximum au double, de préférence entre une fois et le double, de la rugosité de surface (R) dans l'au moins une zone (16).

3. Ensemble de connexion électrique (2) selon la revendication 1 ou 2, **caractérisé en ce qu'**au moins une des surfaces (26, 28), qui sont orientées l'une vers l'autre, des conducteurs (4, 6) est rendue rugueuse dans au moins une partie de l'au moins une zone (16).

4. Ensemble de connexion électrique (2) selon l'une quelconque des revendications 1 à 3, **caractérisé en ce que** les deux conducteurs (4, 6) sont réalisés en un matériau en tôle au moins dans l'au moins une zone (16).

5. Ensemble de connexion électrique (2) selon l'une quelconque des revendications 1 à 4, **caractérisé en ce qu'**au moins un des conducteurs (4, 6) est réalisé dans l'au moins une zone (16) en un matériau contenant de l'aluminium.

6. Ensemble de connexion électrique (2) selon l'une quelconque des revendications 1 à 5, **caractérisé en ce que** le point de soudure (18) est au moins partiellement entouré par la zone (16) et/ou la sous-section (34).

7. Ensemble de connexion électrique (2) selon l'une quelconque des revendications 1 à 6, **caractérisé en ce que** les deux conducteurs (4, 6) se touchent directement, au moins en certains points, en dehors d'un point de soudure (18).

8. Ensemble de connexion électrique (2) selon l'une quelconque des revendications 1 à 7, **caractérisé en ce que** l'un des conducteurs (4) fait partie d'un câble ruban.

9. Électronique de puissance (1) notamment pour véhicule à propulsion électrique, **caractérisée par** un ensemble de connexion électrique (2) selon l'une quelconque des revendications 1 à 8, où l'un des conducteurs (6) est connecté à une batterie (10).

10. Procédé de soudage d'au moins deux conducteurs (4, 6), comprenant les étapes de procédé consistant à :
- enduire au moins une zone (16) d'au moins un conducteur (4, 6) avec une colle à base de cyanoacrylate (14) ;
- appliquer un matériau (22), qui entrave ou empêche le durcissement de la colle à base de cyanoacrylate (14), sur au moins une sous-section (34) de la zone (16) avant ou après l'enduction ; et
- souder les au moins deux conducteurs (4, 6) après l'enduction et après l'application du matériau (22), à un emplacement adjacent à ladite sous-section (34), de sorte que la colle à base de cyanoacrylate (14) soit située entre les deux conducteurs (4, 6).

11. Procédé selon la revendication 10, comprenant l'étape supplémentaire de procédé consistant à :
- rendre rugueuse au moins partiellement la zone (16) avant l'enduction.

12. Procédé selon la revendication 10 ou 11, comprenant l'étape de procédé consistant à :
- souder les au moins deux conducteurs (4, 6) au moyen d'impulsions laser.

13. Procédé selon l'une quelconque des revendications 10 à 12, comprenant l'étape supplémentaire de procédé consistant à :
- souder les au moins deux conducteurs (4, 6) dans une sous-section (34) de la zone (16), ladite sous-section étant celle qui est enduite du matériau (22).
